# FASCICULE DE BREVET EUROPEEN

(11) **EP 2 920 834 B1**
(45) Date de publication et mention de la délivrance du brevet: **04.01.2017**
(21) Numéro de dépôt: 13795838.5
(22) Date de dépôt: 06.11.2013
(51) Int. Cl.: H01M 8/04, F25B 15/00

(54) **INSTALLATION ÉLECTRIQUE À PILE À COMBUSTIBLE REFROIDIE COMPRENANT UNE MACHINE THERMIQUE À ABSORPTION**
GEKÜHLTE BRENNSTOFFZELLENVORRICHTUNG DIE EINE ABSORPTIONSKÄLTEANLAGE UMFASST
FUEL CELL INSTALLATION COMPRISING AN ABSORPTION REFRIGERATING DEVICE

(30) Priorité: 16.11.2012 FR 1260914
(43) Date de publication de la demande: 23.09.2015
(73) Titulaire: Snecma, 75015 Paris (FR)
(72) Inventeur: BOUDJEMAA, Fabien, F-92380 Garches (FR); HAFSAOUI, Omar, F-76500 Elbeuf (FR)
(74) Mandataire: Calvo de Nó, Rodrigo
(86) Numéro de dépôt international: PCT/FR2013/052651
(87) Numéro de publication internationale: WO 2014/076389

(56) Documents cités:
- FR-A1- 2 832 786
- US-A1- 2012 122 002

## Description

### DOMAINE DE L'INVENTION

La présente invention a pour objet une installation comprenant un module de puissance fournissant de l'électricité, dégageant de la chaleur, et nécessitant d'être refroidi.

Plus particulièrement, la présente invention concerne une installation comprenant un module de puissance comportant au moins une pile à combustible munie d'une anode et d'une cathode et au moins un reformeur, fournissant de l'hydrogène à l'anode.

L'installation selon l'invention est particulièrement adaptée à être embarquée, notamment à bord d'un aéronef tel qu'un avion.

### ETAT DE LA TECHNIQUE ANTERIEURE

Un tel module de puissance dégageant de la chaleur doit être refroidi afin de garantir son bon fonctionnement. En particulier, la pile à combustible doit être maintenue à sa bonne température de marche.

Une installation comprenant un module de puissance et un système de refroidissement d'un tel module de puissance est connue. Le système de refroidissement d'une telle installation comprend une boucle fermée de circulation d'un liquide échangeant de la chaleur avec le module de puissance, ceci ayant pour effet de réchauffer ledit liquide. Le liquide réchauffé est ensuite refroidi par son passage dans un radiateur couplé à un ventilateur soufflant de l'air extérieur. Ce système de refroidissement comporte également une boucle d'évacuation de la chaleur générée spécifiquement par la pile, intégrée à celle-ci. Ainsi, comme dans la boucle fermée de circulation d'un liquide, la chaleur dégagée spécifiquement par la pile à combustible est extraite par un liquide circulant dans la boucle d'évacuation de la chaleur générée spécifiquement par ladite pile et échangée à travers un radiateur couplé à un ventilateur soufflant de l'air extérieur.

Un tel système de refroidissement, faisant intervenir au moins un radiateur couplé à un ventilateur pour refroidir le liquide, est volumineux. Cela a pour effet de rendre difficile son installation dans un système embarqué.

En outre, ce système de refroidissement est peu efficace et de ce fait, dégrade le rendement du module de puissance.

Par ailleurs, la performance de ce système de refroidissement est dépendante de la différence de température entre le liquide précité de ladite boucle fermée et de ladite boucle d'évacuation, et l'air extérieur soufflé par les ventilateurs. En effet, cette différence de température peut être dans certains cas limitée, notamment dans le cas où l'installation est située dans une zone chaude tel qu'un pays chaud par exemple.

De plus, dans cette installation, la chaleur échangée entre le liquide de la boucle fermée de circulation et les zones chaudes du module est perdue et ne peut être utilisée comme source d'énergie auxiliaire. Il en est de même pour la chaleur générée spécifiquement par la pile à combustible échangée avec ladite boucle d'évacuation de chaleur générée spécifiquement par la pile à combustible.

On connaît en outre du document WO 2007/114802, une machine thermique à absorption insérée dans un circuit d'évacuation de chaleur spécifique à une pile à combustible.

### PRESENTATION DE L'INVENTION

Un but de la présente invention est de remédier au moins substantiellement aux inconvénients précités.

L'invention atteint son but en proposant une installation comprenant :
- un module de puissance fournissant de l'électricité et dégageant de la chaleur, le module de puissance comprenant au moins une pile à combustible munie d'une anode et d'une cathode, et au moins un reformeur, l'anode étant alimentée en hydrogène par le reformeur et la cathode étant alimentée en oxygène, la pile à combustible comprenant une boucle d'évacuation de chaleur,
- une machine thermique à absorption comportant un premier bouilleur, un condenseur, un évaporateur et un absorbeur, un circuit d'échange thermique du premier bouilleur étant inséré dans la boucle d'évacuation de chaleur de la pile à combustible pour refroidir celle-ci, et
- un circuit fermé de circulation d'un liquide, ledit circuit fermé de circulation comprenant au moins un échangeur de chaleur comportant un circuit chauffant couplé thermiquement au module de puissance et un circuit chauffé inséré dans ledit circuit fermé de circulation, ledit circuit fermé de circulation échangeant de la chaleur avec ledit circuit chauffant, chauffant ainsi le liquide du circuit fermé de circulation, et
un circuit d'échange thermique de l'évaporateur étant inséré dans ledit circuit fermé de circulation d'un liquide, ledit circuit d'échange thermique de l'évaporateur étant traversé par ledit liquide chauffé du circuit fermé de circulation après son passage dans le circuit chauffé dudit échangeur, pour refroidir ce liquide chauffé dudit circuit de circulation.

On comprend que la machine thermique à absorption comprenant le premier bouilleur, le condenseur, l'évaporateur et l'absorbeur, est connue en soi. Le premier bouilleur, le condenseur, l'évaporateur et l'absorbeur sont des échangeurs de chaleur spécifiques, c'est-à-dire qu'ils permettent de transférer de l'énergie thermique (chaleur) d'un fluide vers un autre.

De plus, on comprend que « premier bouilleur » signifie que que la machine thermique à absorption n'est pas limitée à un seul bouilleur mais peut comprendre un autre bouilleur par exemple, comme décrit ci-dessous.

Cette machine thermique à absorption fonctionne notamment grâce à la faculté de certains fluides d'absorber ou désorber une vapeur. Cette machine utilise alors comme « fluides de travail » un mélange binaire dont l'un des fluides est plus volatil que l'autre, celui-ci étant appelé « fluide frigorigène ».

Par ailleurs, on comprend que la boucle d'évacuation de chaleur de la pile à combustible comporte un fluide caloporteur qui extrait la chaleur générée spécifiquement par la pile à combustible lors de son fonctionnement. Ainsi, on comprend que le fluide caloporteur ayant extrait la chaleur dégagée par la pile à combustible traverse le circuit d'échange thermique du premier bouilleur de la machine thermique à absorption en cédant la chaleur extraite à un mélange d'un fluide frigorigène et d'un absorbant contenu dans le premier bouilleur (dans le présent exposé, on entend par « circuit d'échange thermique », un circuit dans lequel circule un fluide cédant ou absorbant de la chaleur).

Cela a pour effet de faire bouillir ou désorber une partie du fluide frigorigène qui est envoyé dans le condenseur pour être condensé par échange de chaleur avec un fluide plus froid circulant dans un circuit d'échange thermique du condenseur, ceci produisant un fluide frigorigène liquide. Le mélange concentré en absorbant restant dans le premier bouilleur alimente l'absorbeur.

Le fluide frigorigène liquide sortant du condenseur passe ensuite dans un évaporateur pour être vaporisé par échange de chaleur avec un fluide plus chaud circulant dans le circuit d'échange thermique de l'évaporateur. Cette vapeur de fluide frigorigène en sortie de l'évaporateur passe ensuite dans l'absorbeur où elle est absorbée par le mélange concentré en absorbant provenant du premier bouilleur, qui se charge alors en fluide frigorigène. La chaleur dégagée par cette réaction exothermique est transférée à un fluide circulant dans un circuit d'échange thermique de l'absorbeur. On obtient dans l'absorbeur une solution diluée en absorbant qui alimente ensuite le premier bouilleur.

Ces dispositions permettent de refroidir la pile à combustible et de la maintenir à sa température de marche optimale.

Dans cet exposé, ledit échangeur de chaleur, ci-après appelé « échangeur », est connu en soi. Comme mentionné ci-dessus, il s'agit d'un dispositif permettant de transférer l'énergie thermique d'un fluide vers un autre.

On entend ici par « circuit chauffant », un circuit dans lequel circule un fluide chaud cédant de l'énergie thermique. On entend alors, ici, par « circuit chauffé », un circuit dans lequel circule un fluide froid recevant l'énergie thermique dudit fluide chaud circulant dans le circuit chauffant.

En outre, on entend ici par « couplé thermiquement » que le circuit chauffant est intégré dans un circuit de fluide chaud émanant du module de puissance, tel qu'un fluide d'alimentation de la pile et/ou du reformeur ou bien un fluide d'évacuation de la pile et/ou du reformeur, etc., et que le fluide chaud traverse le circuit chauffant.

On comprend alors que le fluide chaud qui circule dans le circuit chauffant dudit échangeur transfert de la chaleur au liquide du circuit fermé de circulation circulant dans le circuit chauffé dudit échangeur. Cela a pour effet de refroidir le fluide chaud émanant du module de puissance et de chauffer le liquide du circuit fermé de circulation, ci-après appelé « liquide chauffé du circuit fermé de circulation ».

On comprend en outre que le liquide chauffé du circuit fermé de circulation constitue le liquide plus chaud précité circulant dans le circuit d'échange thermique de l'évaporateur. Ainsi, on comprend que ce liquide chauffé circulant dans le circuit d'échange thermique de l'évaporateur va céder de la chaleur au fluide frigorigène liquide contenu dans l'évaporateur et provenant du condenseur. En sortie du circuit d'échange thermique de l'évaporateur, le liquide du circuit fermé de circulation est alors plus froid et est réacheminé vers le circuit chauffé dudit échangeur de chaleur pour échanger de la chaleur avec ledit circuit chauffant dudit échangeur.

Grâce à ces dispositions, on refroidit le module de puissance afin d'assurer son bon fonctionnement.

En outre, ces dispositions minimisent la taille et le poids de l'installation.

Ces dispositions permettent également de dissiper une plus grande puissance thermique par rapport à l'installation de l'art antérieur dans laquelle un radiateur couplé à un ventilateur soufflant de l'air était utilisé pour refroidir le fluide circulant dans la boucle d'évacuation de la chaleur générée spécifiquement par la pile. Cela est dû au fait que dans une machine thermique à absorption le fluide frigorigène circule dans un circuit fermé où la chaleur latente du fluide frigorigène (quantité de chaleur échangée lors d'un changement d'état du fluide frigorigène) est utilisée pour le fonctionnement de la machine thermique à absorption. En effet, un fluide capte plus d'énergie thermique par unité de masse lorsqu'il change d'état que lorsqu'il élève sa température par chaleur sensible (échange d'énergie thermique sans changement de phase du fluide), comme cela est le cas dans l'installation de l'art antérieur dans laquelle la chaleur générée spécifiquement par la pile est échangée avec l'air soufflé par un ventilateur.

En outre, grâce à ces dispositions l'installation est moins soumise aux températures extérieures par rapport audit dispositif de l'art antérieur comprenant un radiateur couplé à un ventilateur soufflant de l'air. En effet, le fonctionnement de la machine thermique à absorption dépendant principalement de l'énergie thermique qu'on apporte à l'absorbeur, les conditions extérieures n'influencent pas ou peu son rendement.

De plus, dans l'installation selon l'invention, le liquide du circuit fermé de circulation circule dans un circuit fermé et est refroidi par transfert de chaleur à l'évaporateur après son passage dans le circuit chauffé dudit échangeur. Le refroidissement du liquide du circuit fermé de circulation ne dépend donc pas des conditions extérieures.

Ainsi, l'installation selon l'invention est rendue autonome vis-à-vis de son environnement.

Enfin, grâce à ces dispositions on optimise le rendement énergétique du module de puissance (cogénération électricité-chaleur) car la chaleur générée par le module de puissance est utilisée pour le fonctionnement de la machine thermique à absorption. On utilise alors cette énergie thermique pour refroidir le liquide du circuit fermé de circulation après son passage dans le circuit chauffé dudit échangeur. Ce liquide refroidi alimente ensuite le circuit chauffé dudit échangeur pour échanger de la chaleur avec le circuit chauffant dudit échangeur.

En outre, le condenseur de la machine thermique à absorption comprend un circuit d'échange thermique qui est inséré dans un circuit d'alimentation en air de la cathode et/ou du reformeur, pour chauffer cet air.

On comprend que le fluide plus froid précité circulant dans le circuit d'échange thermique du condenseur est de l'air. Cet air provient par exemple de l'environnement extérieur et absorbe la chaleur des vapeurs de fluide frigorigène, cela ayant pour effet de chauffer l'air.

Grâce à ces dispositions, on récupère de l'énergie thermique pour chauffer l'air alimentant la cathode ainsi que le reformeur, et en particulier le brûleur dudit reformeur.

Dans certains modes de réalisation, l'absorbeur de la machine thermique à absorption comprend un circuit d'échange thermique qui est inséré dans un circuit d'alimentation en eau du reformeur, pour chauffer cette eau.

On comprend que pour fonctionner le reformeur nécessite d'être alimenté en eau, de préférence en eau chaude ou en vapeur d'eau. En effet, dans cet exemple, le reformeur effectue un reformage à la vapeur consistant en une réaction catalytique à haute température (environ 800°C) entre un carburant et de l'eau, qui permet de produire un gaz riche en hydrogène. Cette réaction est généralement suivie par une seconde réaction catalytique, à savoir la réaction de gaz à l'eau, qui convertit le monoxyde de carbone et l'eau en hydrogène et dioxyde de carbone.

Ainsi, le fluide précité circulant dans le circuit d'échange thermique de l'absorbeur est de l'eau, de l'eau froide dans cet exemple. L'eau froide en se vaporisant « capte », par transfert thermique, la chaleur des vapeurs de fluide frigorigène sortant de l'évaporateur et injectées dans l'absorbeur. L'eau ainsi vaporisée alimente le reformeur.

Dans certains modes de réalisation, la machine thermique à absorption est une machine thermique à absorption à double effet, ladite machine à absorption à double effet comprenant un deuxième bouilleur.

Cette machine thermique à absorption à double effet est connue en soi.

Cette machine thermique à absorption à double effet comprenant le deuxième bouilleur diffère de la machine thermique à absorption comprenant seulement le premier bouilleur en ce que le deuxième bouilleur est alimenté par le mélange concentré en absorbant restant dans le premier bouilleur et en ce que la vapeur de fluide frigorigène sortant du premier bouilleur traverse un circuit d'échange thermique dudit deuxième bouilleur. Ainsi la vapeur de fluide frigorigène sortant du premier bouilleur échange de la chaleur avec le mélange concentré en absorbant issu du premier bouilleur. Cela a alors pour effet de faire bouillir ou désorber le reste de fluide frigorigène du mélange concentré en absorbant issu du premier bouilleur. La vapeur de fluide frigorigène ainsi générée dans le deuxième bouilleur alimente le condenseur. Cela a également pour effet de condenser la vapeur de fluide frigorigène issue du premier bouilleur traversant le circuit d'échange thermique du deuxième bouilleur. Le liquide de fluide frigorigène ainsi obtenu en sortie du circuit d'échange thermique du deuxième bouilleur est détendu avant d'alimenter le condenseur. En outre, la solution concentrée en absorbant restant dans le deuxième bouilleur alimente l'absorbeur.

Cette disposition permet d'utiliser deux fois la chaleur dégagée par le fonctionnement de la pile à combustible. On comprend alors que cette disposition permet d'optimiser le rendement énergétique du module de puissance. En effet, cette machine thermique à double effet permet d'obtenir un Coefficient de Performance (COP) supérieur à 1.

Dans certains modes de réalisation, le circuit chauffant d'un tel échangeur de chaleur est connecté à un circuit d'évacuation des gaz d'un brûleur du reformeur. Par exemple, cet échangeur de chaleur est un condenseur.

Dans le présent exposé, le condenseur est connu en soi et constitue un échangeur de chaleur permettant de condenser un gaz et de récupérer un liquide de condensat correspondant. Dans l'exemple, le liquide est de l'eau.

On comprend que le brûleur du reformeur éjecte des gaz brûlés chauds de combustion. Ces gaz chauds de combustion circulent dans le circuit chauffant de l'échangeur et échangent de la chaleur avec le liquide du circuit fermé de circulation circulant dans le circuit chauffé de l'échangeur, chauffant ainsi ledit liquide. Ce liquide chauffé du circuit fermé de circulation alimente ensuite le circuit d'échange thermique de l'évaporateur, et sort refroidi dudit circuit d'échange thermique de l'évaporateur.

De plus, dans le présent exposé, le reformeur effectuant un reformage à la vapeur, l'eau contenue dans ces gaz brûlés est récupérée afin d'être réinjectée dans le reformeur.

Dans certains modes de réalisation, le circuit chauffant d'un tel échangeur de chaleur est connecté à un circuit d'alimentation anodique, entre le reformeur et l'anode. Dans une variante, un tel échangeur de chaleur est un condenseur.

On comprend que le reformeur produit un gaz chaud, riche en hydrogène. Ainsi, afin de ne pas endommager la pile à combustible, ce gaz riche en hydrogène doit être refroidi et l'eau qu'il contient doit être éliminée, avant d'alimenter l'anode. Pour ce faire, ce gaz riche en hydrogène traverse le circuit chauffant de l'échangeur pour échanger de la chaleur avec le liquide du circuit fermé de circulation circulant dans le circuit chauffé de l'échangeur et condenser l'eau qu'il contient, chauffant ainsi ledit liquide du circuit fermé de circulation. Ce liquide chauffé du circuit fermé de circulation alimente ensuite le circuit d'échange thermique de l'évaporateur, et sort refroidi dudit circuit d'échange thermique de l'évaporateur. Par ailleurs, l'eau condensée est retournée, comme précédemment, dans le reformeur.

Dans certains modes de réalisation, le circuit chauffant d'un tel échangeur de chaleur est connecté à un circuit d'évacuation de fluide anodique, relié à l'anode. Dans une variante, un tel échangeur de chaleur est un condenseur.

On comprend que le gaz évacué à l'anode passe dans le circuit chauffant de l'échangeur pour échanger de la chaleur avec le liquide du circuit fermé de circulation circulant dans le circuit chauffé dudit échangeur, chauffant ainsi ledit liquide. Ce liquide chauffé du circuit fermé de circulation alimente ensuite le circuit d'échange thermique de l'évaporateur, et sort refroidi dudit circuit d'échange thermique de l'évaporateur. En outre, l'eau de ce gaz est récupérée pour alimenter le reformeur

Dans certains modes de réalisation, le circuit chauffant d'un tel échangeur de chaleur est connecté à un circuit d'évacuation de fluide cathodique relié à la cathode. Dans une variante, un tel échangeur de chaleur est un condenseur.

On comprend que le gaz évacué de la cathode passe dans le circuit chauffant de l'échangeur pour échanger de la chaleur avec le liquide du circuit fermé de circulation circulant dans le circuit chauffé de l'échangeur, chauffant ainsi ledit liquide. Ce liquide chauffé du circuit fermé de circulation alimente ensuite le circuit d'échange thermique de l'évaporateur, et sort refroidi dudit circuit d'échange thermique de l'évaporateur. En outre, l'eau de ce gaz est récupérée pour alimenter le reformeur.

Dans certains modes de réalisation, un liquide de condensat récupéré dans un tel condenseur alimente le reformeur à travers un circuit de condensat.

Comme mentionné précédemment, le reformeur effectue un reformage à la vapeur nécessitant une alimentation en eau. On comprend alors que l'eau récupérée dans le ou chaque condenseur constitue le condensat et alimente le reformeur.

Dans certains modes de réalisation la pile à combustible est une pile à combustible à membrane d'échange de protons haute température.

Ce type de pile à combustible présente l'avantage d'accepter un gaz riche en hydrogène produit par un reformeur, pour alimenter son anode et de l'oxygène provenant de l'air extérieur, pour alimenter sa cathode.

En outre, ce type de pile est propice à la cogénération. En effet, lors de son fonctionnement nominal, elle fournit à peu près autant de puissance thermique qu'électrique.

Dans certains modes de réalisation, l'installation est embarquée.

L'invention concerne également un aéronef comprenant l'installation telle que décrite précédemment.

Plusieurs modes de réalisation sont décrits dans le présent exposé. Toutefois, sauf précision contraire, les caractéristiques décrites en liaison avec un mode de réalisation quelconque peuvent être appliquées à un autre mode de réalisation.

### BREVE DESCRIPTION DES DESSINS

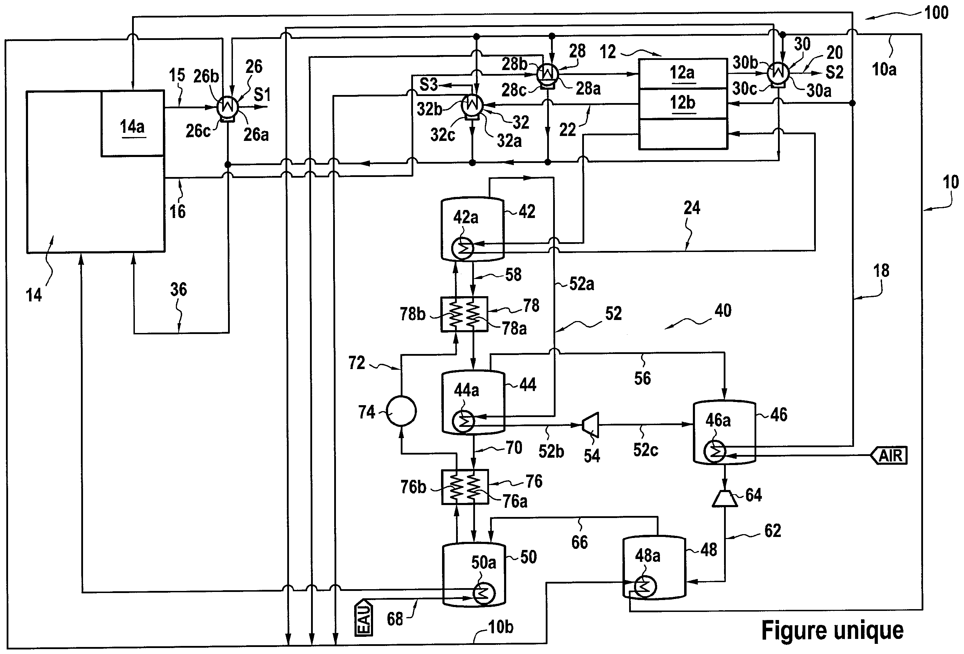

L'invention et ses avantages seront mieux compris à la lecture de la description détaillée faite ci-après d'un mode de réalisation de l'invention donné à titre d'exemple non limitatif. Cette description fait référence à la figure unique annexée, sur laquelle :
- l'unique figure représente une vue schématique d'une installation avec un module de puissance selon l'invention.

### DESCRIPTION DETAILLEE D'EXEMPLES DE REALISATION

La figure unique illustre une installation 100 comprenant essentiellement un module de puissance dégageant de la chaleur et un circuit fermé de circulation 10 d'un liquide, ci-après appelé « circuit fermé de circulation 10 ». Dans cet exemple, le liquide du circuit fermé de circulation 10 est de l'eau.

Dans le présent exposé, l'installation 100 est embarquée dans un aéronef tel qu'un avion. Ainsi, l'eau du circuit de circulation 10 provient, dans cet exemple, d'une réserve d'eau de l'avion.

Le module de puissance comprend une pile à combustible 12 munie d'une anode 12a et d'une cathode 12b. Le module de puissance comprend également un reformeur 14 muni d'un brûleur 14a, produisant un gaz chaud riche en hydrogène. Dans l'exemple, le reformeur 14 effectue un reformage à la vapeur consistant en une réaction catalytique à haute température (environ 800°C) entre un carburant et de l'eau, produisant un gaz riche en hydrogène. Cette réaction est généralement suivie par une seconde réaction catalytique, à savoir la réaction de gaz à l'eau, qui convertit le monoxyde de carbone et l'eau en hydrogène et dioxyde de carbone. Des gaz chauds de combustion résultant de ces réactions et appelés dans la suite du présent exposé « gaz brûlés », sont éjectés par le brûleur hors de l'avion par une sortie S1, après avoir traversé un circuit d'évacuation 15 des gaz du brûleur.

En outre, dans cet exemple, la pile à combustible 12 est une pile à combustible à membrane d'échange de protons haute température fournissant, en fonctionnement nominal, presqu'autant de puissance thermique qu'électrique. Ce type de pile 12 présente l'avantage d'accepter une alimentation anodique en un gaz riche en hydrogène produit par le reformeur 14, à travers un circuit d'alimentation anodique 16 reliant une sortie du reformeur 14 à une entrée de l'anode 12a. Ce type de pile 12 accepte, en outre, une alimentation cathodique en oxygène à partir de l'air extérieur.

Cet air extérieur est prélevé par le biais d'un circuit d'alimentation 18 en air de la cathode 12b et du brûleur 14a du reformeur 14. Par ailleurs, ce circuit d'alimentation 18 alimente également le reformeur 14, et plus précisément son brûleur 14a.

Un circuit d'évacuation 20 des gaz anodiques, c'est-à-dire les gaz sortant de l'anode 12a, relie une sortie de l'anode 12a à l'extérieur de l'avion par une sortie S2, pour l'échappement desdits gaz. En outre, un circuit d'évacuation 22 des gaz cathodiques, c'est-à-dire les gaz sortant de la cathode 12b, relie une sortie de la cathode 12b à l'extérieur de l'avion pour l'échappement de ces gaz par une sortie S3.

La pile à combustible 12 comprend une boucle 24 d'évacuation de chaleur générée par le fonctionnement de ladite pile 12. Ici, un fluide caloporteur circule dans ladite boucle 24 et extrait la chaleur générée par le fonctionnement de la pile à combustible.

L'installation 100 comprend en outre quatre échangeurs de chaleur 26, 28, 30, 32 qui sont, dans cet exemple, des condenseurs. Dans une variante, l'installation 100 pourrait comprendre plus ou moins d'échangeurs et/ou condenseurs.

Chaque condenseur 26, 28, 30, 32 comprend un circuit chauffant 26a, 28a, 30a, 32a, couplé thermiquement au module de puissance, c'est-à-dire que le circuit chauffant est intégré à un circuit de fluide chaud émanant du module de puissance, tel qu'un fluide d'alimentation de la pile 12 ou bien un fluide d'évacuation de la pile 12 et/ou du reformeur 14, etc. Ainsi les circuits chauffants 26a, 28a, 30a, 32a, sont connectés, respectivement, au circuit d'évacuation 15 des gaz brûlés du brûleur 14a, au circuit d'alimentation anodique 16, au circuit d'évacuation 20 des gaz anodiques et au circuit d'évacuation 22 des gaz cathodiques.

Par ailleurs, chaque condenseur 26, 28, 30, 32 comprend, respectivement, un circuit chauffé 26b, 28b, 30b, 32b, inséré dans le circuit fermé de circulation 10 d'eau. On comprend par « inséré » que l'eau du circuit fermé de circulation 10 circule dans chaque circuit chauffé 26b, 28b, 30b, 32b. En outre, les circuits chauffés 26b, 28b, 30b, 32b, sont insérés en parallèle les uns par rapport aux autres dans le circuit fermé de circulation 10 d'eau entre une première conduite 10a d'eau et une deuxième conduite 10b d'eau dudit circuit fermé de circulation 10.

De plus, chaque condenseur 26, 28, 30, 32 comprend un réservoir 26c, 28c, 30c, 32c, d'eau condensée. Cette eau condensée récupérée est injectée dans le reformeur 14 par le biais d'un circuit 36 de condensat.

Afin de réguler la température interne de la pile à combustible 12 et donc d'assurer son bon fonctionnement, celle-ci doit être refroidie. Dans cet exemple, la pile 12 étant du type à membrane d'échange de protons haute température, sa température doit être maintenue aux alentours de 170°C. Pour ce faire, l'installation comprend une machine thermique à absorption 40, à double effet, dans cet exemple. Cette machine thermique à absorption 40 à double effet est connue en soi et ci-après appelée « machine thermique ».

La structure de la machine thermique 40 va être décrite dans la partie suivante de la description. Les termes « amont » et « aval » sont définis par rapport au sens normal de circulation d'un fluide frigorigène et/ou d'un absorbant dans une machine thermique à absorption.

Elle comporte essentiellement un premier bouilleur 42 comprenant un mélange d'un fluide frigorigène et d'un absorbant. Le fluide frigorigène est dans cet exemple de l'eau et l'absorbant du bromure de lithium. Ce mélange contenu dans le premier bouilleur 42 est appelé ci-après « mélange dilué ».

La machine thermique 40 comporte en outre un deuxième bouilleur 44, un condenseur 46, un évaporateur 48, et un absorbeur 50.

De plus, dans cette machine thermique à absorption 40:
- un circuit d'échange thermique 42a du premier bouilleur 42 est inséré dans la boucle 24 d'évacuation de chaleur de la pile à combustible 12,
- un premier circuit 52 de frigorigène comprenant trois sous-circuits 52a, 52b, 52c, relie le premier bouilleur 42 au condenseur 46,
- un circuit d'échange thermique 44a du deuxième bouilleur 44 est inséré dans ledit premier circuit 52 de frigorigène,
- un premier détendeur 54 est inséré dans le premier circuit 52 de frigorigène, en aval du circuit d'échange thermique 44a du deuxième bouilleur 44 et en amont du condenseur 46,
- un deuxième circuit 56 de frigorigène relie le deuxième bouilleur 44 au condenseur 46,
- un circuit d'alimentation 58 du deuxième bouilleur 44 relie le premier bouilleur 42 au deuxième bouilleur 44,
- un circuit d'échange thermique 46a du condenseur 46 est inséré dans un circuit d'alimentation 18 en air de la cathode et du brûleur 14a du reformeur 14,
- un troisième circuit 62 de frigorigène relie le condenseur 46 à l'évaporateur 48,
- un deuxième détendeur 64 est inséré dans le troisième circuit 62 de frigorigène, en aval du condenseur 46 et en amont de l'évaporateur 48,
- un circuit d'échange thermique 48a de l'évaporateur 48 est inséré dans le circuit fermé de circulation 10 d'eau, en aval du circuit chauffé 26b, 28b, 30b, 32b de chaque échangeur 26, 28, 30, 32,
- un quatrième circuit 66 de frigorigène relie l'évaporateur 48 à l'absorbeur 50,
- un circuit d'échange thermique 50a de l'absorbeur 50 est inséré dans un circuit d'alimentation 68 en eau du reformeur 14, ce circuit 68 prenant sa source, dans cet exemple, dans une réserve d'eau froide,
- un circuit d'alimentation 70 de mélange concentré en absorbant relie le deuxième bouilleur 44 à l'absorbeur 50,
- un circuit d'alimentation 72 du premier bouilleur 42 relie l'absorbeur 50 au premier bouilleur 42 par l'intermédiaire d'une pompe 74, connectée au circuit d'alimentation 72 du premier bouilleur 42, en aval de l'absorbeur 50 et en amont du premier bouilleur 42.

Cette machine thermique 40 comprend en outre un premier échangeur de chaleur 76 comportant un premier circuit d'échange thermique 76a inséré dans le circuit 70 de mélange concentré en absorbant et un deuxième circuit d'échange thermique 76b inséré dans le circuit d'alimentation 72 du premier bouilleur 42.

La machine thermique 40 comprend également un deuxième échangeur de chaleur 78 comportant un premier circuit d'échange thermique 78a inséré dans le circuit d'alimentation 58 du deuxième bouilleur 44 et un deuxième circuit d'échange thermique 78b inséré dans le circuit d'alimentation 72 du premier bouilleur 42.

Le fonctionnement de l'installation 100 selon l'invention va être décrit ci-dessous.

Afin de récupérer de l'eau pour alimenter le reformeur 14, le circuit chauffant 26a du condenseur 26 des gaz brûlés est connecté au circuit d'évacuation 15 des gaz du brûleur 14a. Les gaz brûlés éjectés du brûleur 14a traversent ledit circuit chauffant 26a et échangent leur chaleur avec le circuit chauffé 32b du condenseur 26 des gaz brûlés dans lequel circule l'eau du circuit fermé de circulation 10. Par ailleurs, l'eau condensée contenue dans les gaz brûlés est récupérée dans le réservoir 26c dudit condenseur 26 des gaz brûlés et alimente le reformeur 14 par le circuit 36 de condensat.

De même que précédemment, on récupère l'eau du gaz chaud, riche en hydrogène, sortant du reformeur 14 par le circuit d'alimentation anodique 16 pour la réinjecter dans le reformeur 14. De plus, ce gaz riche en hydrogène sortant du reformeur 14 doit être refroidi et déshydraté avant d'alimenter l'anode 12a. Dans cette optique, le circuit chauffant 28a du condenseur pré-anodique 28 est connecté au circuit d'alimentation anodique 16. Ainsi, le gaz riche en hydrogène sortant du reformeur 14 passe dans le circuit chauffant 28a du condenseur pré-anodique 28 et échange de la chaleur avec le circuit chauffé 28b dudit condenseur 28 dans lequel circule l'eau du circuit fermé de circulation 10. L'eau de condensation récupérée dans le réservoir 28c du condenseur pré-anodique 28 est injectée dans le reformeur 14 par le circuit 36 de condensat.

On récupère également l'eau contenue dans les gaz évacués à l'anode 12a. Pour ce faire, le circuit chauffant 30a du condenseur post-anodique 30 est connecté au circuit d'évacuation 20 des gaz anodiques. Le fluide chaud sortant de l'anode 12a passe dans le circuit chauffant 30b du condenseur post-anodique 30 et échange de la chaleur avec le circuit chauffé 30b du condenseur post-anodique 30 dans lequel circule l'eau du circuit fermé de circulation. Comme précédemment, l'eau condensée récupérée dans le réservoir 30c du condenseur post-anodique 30 est injectée dans le reformeur 14 par le circuit 36 de condensat.

Enfin, on récupère l'eau contenue dans les gaz évacués à la cathode 12b. Ainsi, le circuit chauffant 32a du condenseur post-cathodique 32 est connecté au circuit d'évacuation 22 des gaz cathodiques. Le fluide chaud sortant de la cathode 12b traverse le circuit chauffant 38a du condenseur post cathodique 32 et échange de la chaleur avec le circuit chauffé 38b du condenseur post-cathodique 32 dans lequel circule l'eau du circuit fermé de circulation. L'eau de condensation récupérée dans le réservoir 32c dudit condenseur post-cathodique 32 est renvoyée vers le reformeur 14 par le circuit 36 de condensat.

Ainsi, on comprend que l'eau du circuit fermé de circulation 10 sortant de chaque circuit chauffé, 26b, 28b, 30b, 32b est chauffée et appelée ci-après « eau chaude ».

Par ailleurs, comme mentionné précédemment, la pile à combustible 12 doit être refroidie.

Pour ce faire, le circuit d'échange thermique 42a du premier bouilleur 42 est inséré dans la boucle 24 d'évacuation de chaleur de la pile à combustible 12.

Ainsi, le fluide caloporteur de ladite boucle 24 ayant extrait la chaleur générée par le fonctionnement de la pile à combustible 12 échange cette chaleur avec le mélange de fluide frigorigène et d'absorbant (appelé « mélange dilué » par la suite) contenue dans le premier bouilleur 42.

Ceci a alors pour effet de faire bouillir ou désorber une partie du fluide frigorigène du mélange dilué contenu dans premier bouilleur 42. Le mélange restant dans le premier bouilleur 42 ayant « perdu » de l'eau, il est appelé « mélange concentré en absorbant de premier bouilleur 42».

Ce mélange concentré en absorbant de premier bouilleur 42 alimente le deuxième bouilleur 44 par le circuit d'alimentation 58 du deuxième bouilleur 44. En outre, ladite vapeur de fluide frigorigène générée dans le premier bouilleur 42 traverse le premier sous-circuit 52a du premier circuit 52 de frigorigène et traverse le circuit d'échange thermique 44a du deuxième bouilleur 44. Par conséquent, cette vapeur de fluide frigorigène traversant le circuit d'échange thermique 44a du deuxième bouilleur 44 échange de la chaleur avec le mélange concentré en absorbant de premier bouilleur 42, contenu dans le deuxième bouilleur 44.

Cela a pour effet de faire bouillir ou désorber le fluide frigorigène liquide restant, contenu dans ce mélange concentré en absorbant issu du premier bouilleur 42 et contenu dans le deuxième bouilleur 44.

La vapeur de fluide frigorigène générée dans le deuxième bouilleur 44 alimente le condenseur 46 par le deuxième circuit 56 de frigorigène pour alimenter le condenseur 46. En outre, la vapeur de fluide frigorigène issue du premier bouilleur 42 sort condensée du circuit d'échange thermique 44a du deuxième bouilleur 44.

Le fluide frigorigène liquide ainsi généré traverse le deuxième sous-circuit 52b du premier circuit 52 de frigorigène et est détendu par le premier détendeur 54.

La vapeur de fluide frigorigène ainsi générée traverse le troisième sous-circuit 52c du premier circuit 52 de frigorigène pour alimenter le condenseur 46.

Le mélange restant dans le deuxième bouilleur 44 étant pauvre en frigorigène, il est appelé dans la suite de la description « mélange concentré en absorbant de deuxième bouilleur 44 ». Ce mélange concentré en absorbant de deuxième bouilleur 44 alimente l'absorbeur 50 à travers le circuit d'alimentation 70 de mélange concentrée en absorbant.

La vapeur de fluide frigorigène contenue dans le condenseur 46 issue du troisième sous-circuit 52b, est condensée par échange de chaleur avec le circuit d'échange thermique 46a du condenseur 46 inséré dans le circuit 18 d'alimentation en air de la cathode 12b et du brûleur 14a du reformeur 14. L'air étant plus froid que ladite vapeur de fluide frigorigène, cette dernière transfère la chaleur qu'elle contient à l'air, ceci générant de l'air chaud. Cet air chaud, sortant du circuit d'échange thermique 46a du condenseur, alimente la cathode 12b de la pile à combustible 12 et le brûleur 14a du reformeur 14.

Par ailleurs, le fluide frigorigène liquide formé dans le condenseur 46 sort dudit condenseur 46 par le troisième circuit 62 de frigorigène et alimente l'évaporateur 48, après avoir subi un laminage à travers le deuxième détendeur 64. Le laminage a pour effet de baisser la pression du fluide frigorigène liquide.

En outre, comme mentionné précédemment, le circuit d'échange thermique 48a de l'évaporateur 48 est inséré dans le circuit fermé de circulation 10 d'eau en aval de la sortie du circuit chauffé 26b, 28b, 30b, 32b de chaque échangeur 26, 28, 30, 32. Ainsi, l'eau du circuit fermé de circulation 10 sortant du circuit chauffé 26b, 28b, 30b, 32b de chacun des échangeurs 26, 28, 30, 32 traverse le circuit d'échange thermique 48a de l'évaporateur 48. Cette eau chaude du circuit fermé de circulation 10 étant plus chaude que le fluide frigorigène liquide contenu dans l'évaporateur 48 par le troisième circuit 62 de frigorigène, ladite eau chaude du circuit fermé de circulation 10 transfère de la chaleur au fluide frigorigène liquide contenu dans l'évaporateur 48.

Ceci a pour effet de vaporiser le fluide frigorigène contenu dans l'évaporateur et de refroidir l'eau chaude du circuit fermé de circulation, cette eau chaude refroidie du circuit fermé de circulation est appelée dans la suite du présent exposé « eau froide ». L'eau froide alimente ensuite le circuit chauffant 26a, 28a, 30a, 32a de chaque condenseur 26, 28, 30, 32 pour qu'il échange thermiquement avec le circuit chauffé 26b, 28b, 30b, 32b de chaque condenseur 26, 28, 30, 32.

Puis cette vapeur de fluide frigorigène générée dans l'évaporateur 48 traverse le quatrième circuit 66 de vapeur de fluide frigorigène pour alimenter l'absorbeur 50.

Le circuit d'échange thermique 50a de l'absorbeur 50 étant inséré dans le circuit d'alimentation 68 en eau du reformeur 14, cette eau froide capte, en se vaporisant, la chaleur émise par l'absorption de la vapeur de fluide frigorigène issue de l'évaporateur 48. Cela a alors pour effet de condenser cette vapeur de fluide frigorigène qui se mélange au mélange concentré en absorbant de deuxième bouilleur 44, issu dudit deuxième bouilleur 44 par le circuit d'alimentation 70 de mélange concentré en absorbant. Ce mélange obtenu dans l'absorbeur 50 constitue le mélange dilué en absorbant et alimente le premier bouilleur 42 à travers le circuit d'alimentation 72 du premier bouilleur 42 par l'intermédiaire de la pompe 74.

Par ailleurs, le premier circuit 76a du premier échangeur de chaleur 76 inséré dans le circuit 70 de mélange concentré en absorbant absorbe la chaleur de ce mélange et la transfère à son deuxième circuit 76b inséré dans le circuit d'alimentation 72 du premier bouilleur 42.

De même, le premier circuit 78a du deuxième échangeur de chaleur 78 inséré dans le circuit d'alimentation 58 du deuxième bouilleur 44 capte la chaleur du mélange concentré en absorbant de premier bouilleur 42 et la transfère à son deuxième circuit 78b inséré dans le circuit d'alimentation 72 du premier bouilleur 42.

Le premier et le deuxième échangeur de chaleur 76, 78, ont pour vocation de réduire la quantité de chaleur devant être évacuée dans l'absorbeur 50.

Ainsi, grâce à l'installation selon l'invention, pour 100kW de puissance frigorifique disponibles, environ 40kW seront utilisés pour récupérer l'eau contenue dans les gaz sortant de la cathode, environ 30kW pour récupérer l'eau contenu dans le gaz riche en hydrogène alimentant l'anode, environ 25kW pour récupérer l'eau contenu dans les gaz chauds de combustion et environ 5kW pour récupérer l'eau contenue dans les gaz sortant de l'anode.

Bien que la présente invention ait été décrite en se référant à un exemple de réalisation spécifique, il est évident que des modifications et des changements peuvent être effectués sur cet exemple sans sortir de la portée générale de l'invention telle que définie par les revendications. En particulier, des caractéristiques individuelles du mode de réalisation illustré/mentionné peuvent être combinées dans des modes de réalisation additionnels. Par conséquent, la description et le dessin doivent être considérés dans un sens illustratif plutôt que restrictif.

## Revendications

1. Installation (100) comprenant :
- un module de puissance fournissant de l'électricité et dégageant de la chaleur, le module de puissance comprenant au moins une pile à combustible (12) munie d'une anode (12a) et d'une cathode (12b), et au moins un reformeur (14), l'anode (12b) étant alimentée en hydrogène par le reformeur (14) et la cathode (12b) étant alimentée en oxygène, la pile à combustible (12) comprenant une boucle (24) d'évacuation de chaleur,
- une machine thermique à absorption (40) comportant un premier bouilleur (42), un condenseur (46), un évaporateur (48) et un absorbeur (50) un circuit d'échange thermique (42a) du premier bouilleur (42) étant inséré dans la boucle (24) d'évacuation de chaleur de la pile à combustible (12) pour refroidir celle-ci, et
- un circuit fermé de circulation (10) d'un liquide, ledit circuit fermé de circulation (10) comprenant au moins un échangeur de chaleur (26, 28, 30, 32) comportant un circuit chauffant (26a, 28a, 30a, 32a) couplé thermiquement au module de puissance et un circuit chauffé (26b, 28b, 30b, 32b) inséré dans ledit circuit fermé de circulation (10), ledit circuit fermé de circulation (10) échangeant de la chaleur avec ledit circuit chauffant (26a, 28a, 30a, 32a), chauffant ainsi le liquide du circuit fermé de circulation (10), et dans laquelle
un circuit d'échange thermique (48a) de l'évaporateur (48) est inséré dans ledit circuit fermé de circulation (10) d'un liquide, ledit circuit d'échange thermique (48a) de l'évaporateur (48) étant traversé par ledit liquide chauffé du circuit fermé de circulation (10) après son passage dans le circuit chauffé (26b, 28b, 30b, 32b) dudit échangeur (26, 28, 30, 32), pour refroidir ce liquide chauffé dudit circuit fermé de circulation (10),
l'installation (100) étant **caractérisée en ce que** le condenseur (46) de la machine thermique à absorption (40) comprend un circuit d'échange thermique (46a) qui est inséré dans un circuit d'alimentation (18) en air de la cathode (12b) et/ou du reformeur (14), pour chauffer cet air.

2. Installation (100) selon la revendication 1, **caractérisée en ce que** l'absorbeur de la machine thermique à absorption (40) comprend un circuit d'échange thermique (50a) qui est inséré dans un circuit d'alimentation (68) en eau du reformeur (14), pour chauffer cette eau.

3. Installation (100) selon l'une quelconque des revendications 1 à 2, **caractérisée en ce que** la machine thermique à absorption (40) est une machine thermique à absorption à double effet, ladite machine à absorption à double effet comprenant un deuxième bouilleur (44).

4. Installation (100) selon l'une quelconque des revendications 1 à 3, **caractérisée en ce que** le circuit chauffant (26a) d'un tel échangeur de chaleur (26) est connecté à un circuit d'évacuation (15) des gaz d'un brûleur (14a) du reformeur (14).

5. Installation (100) selon l'une quelconque des revendications 1 à 4 **caractérisée en ce que** le circuit chauffant (28a) d'un tel échangeur de chaleur (28) est connecté à un circuit d'alimentation anodique (16), entre le reformeur (14) et l'anode (12a).

6. Installation (100) selon l'une quelconque des revendications 1 à 5, **caractérisée en ce que** le circuit chauffant (30a) d'un tel échangeur de chaleur (30) est connecté à un circuit d'évacuation (20) de fluide anodique relié à l'anode (12a).

7. Installation (100) selon l'une quelconque des revendications 1 à 6, **caractérisée en ce que** le circuit chauffant (32a) d'un tel échangeur de chaleur (32) est connecté à un circuit d'évacuation (22) de fluide cathodique relié à la cathode (12b).

8. Installation (100) selon la revendication 4, **caractérisée en ce que** l'échangeur de chaleur (26) précité est un condenseur.

9. Installation (100) selon la revendication 5, **caractérisée en ce que** l'échangeur de chaleur (28) précité est un condenseur.

10. Installation (100) selon la revendication 6, **caractérisée en ce que** l'échangeur de chaleur (30) précité est un condenseur.

11. Installation (100) selon la revendication 7, **caractérisée en ce que** l'échangeur de chaleur (32) précité est un condenseur.

12. Installation (100) selon la revendication 2 et l'une quelconque des revendications 7 à 11, **caractérisée en ce qu'**un liquide de condensat récupéré dans un tel condenseur (26, 28, 30, 32) alimente le reformeur (14) à travers un circuit (36) de condensat.

13. Installation (100) selon l'une quelconque des revendications 1 à 12, **caractérisée en ce que** la pile à combustible (12) est une pile à combustible à membrane d'échange de protons haute température.

14. Installation (100) selon l'une quelconque des revendications 1 à 13, **caractérisée en ce qu'**elle est embarquée.

15. Aéronef comprenant l'installation (100) selon l'une quelconque des revendications 1 à 14.

## Patentansprüche

1. Anlage (100), umfassend:
- ein Leistungsmodul, das Elektrizität liefert und Wärme abgibt, wobei das Leistungsmodul wenigstens eine Brennstoffzelle (12), die mit einer Anode (12a) und mit einer Kathode (12b) ausgestattet ist, sowie wenigstens einen Reformer (14) umfasst, wobei die Anode (12b) durch den Reformer (14) mit Wasserstoff versorgt wird und wobei die Kathode (12b) mit Sauerstoff versorgt wird, wobei die Brennstoffzelle (12) eine Wärmeabführschleife (24) umfasst,
- eine Absorptionswärmemaschine (40), die einen ersten Kocher (42), einen Kondensator (46), einen Verdampfer (48) und einen Absorber (50) umfasst, wobei ein Wärmeaustauschkreis (42a) des ersten Kochers (42) in die Wärmeabführschleife (24) der Brennstoffzelle (12) eingefügt ist, um diese zu kühlen, und
- einen geschlossenen Kreis zum Zirkulieren (10) einer Flüssigkeit, wobei der geschlossene Zirkulationskreis (10) wenigstens einen Wärmetauscher (26, 28, 30, 32) mit einem Heizkreis (26a, 28a, 30a, 32a), der mit dem Leistungsmodul thermisch gekoppelt ist, und einem erhitzten Kreis (26b, 28b, 30b, 32b), der in den geschlossenen Zirkulationskreis (10) eingefügt ist, umfasst, wobei der geschlossene Zirkulationskreis (10) mit dem Heizkreis (26a, 28a, 30a, 32a) Wärme austauscht, wodurch die Flüssigkeit des geschlossenen Zirkulationskreises (10) erhitzt wird, und wobei
ein Wärmeaustauschkreis (48a) des Verdampfers (48) in den geschlossenen Kreis zum Zirkulieren (10) einer Flüssigkeit eingefügt ist, wobei der Wärmeaustauschkreis (48a) des Verdampfers (48) von der erhitzten Flüssigkeit des geschlossenen Zirkulationskreises (10), nachdem sie den erhitzten Kreis (26b, 28b, 30b, 32b) des Tauschers (26, 28, 30, 32) durchlaufen hat, durchlaufen wird, um diese erhitzte Flüssigkeit des geschlossenen Zirkulationskreises (10) zu kühlen,
wobei die Anlage (100) **dadurch gekennzeichnet ist, dass** der Kondensator (46) der Absorptionswärmemaschine (40) einen Wärmeaustauschkreis (46a) umfasst, der in einen Kreis zur Luftversorgung (18) der Kathode (12b) und/oder des Reformers (14) eingefügt ist, um diese Luft zu erhitzen.

2. Anlage (100) nach Anspruch 1, **dadurch gekennzeichnet, dass** der Absorber der Absorptionswärmemaschine (40) einen Wärmeaustauschkreis (50a) umfasst, der in einen Wasserversorgungskreis des Reformers (14) eingefügt ist, um dieses Wasser zu erhitzen.

3. Anlage (100) nach einem der Ansprüche 1 bis 2, **dadurch gekennzeichnet, dass** die Absorptionswärmemaschine (40) eine doppelt wirkende Absorptionswärmemaschine ist, wobei die doppelt wirkende Absorptionsmaschine einen zweiten Kocher (44) umfasst.

4. Anlage (100) nach einem der Ansprüche 1 bis 3, **dadurch gekennzeichnet, dass** der Heizkreis (26a) eines solchen Wärmetauschers (26) an einen Kreis zum Abführen (15) der Gase eines Brenners (14a) des Reformers (14) angeschlossen ist.

5. Anlage (100) nach einem der Ansprüche 1 bis 4, **dadurch gekennzeichnet, dass** der Heizkreis (28a) eines solchen Wärmetauschers (28) an einen Anodenversorgungskreis (16) zwischen dem Reformer (14) und der Anode (12a) angeschlossen ist.

6. Anlage (100) nach einem der Ansprüche 1 bis 5, **dadurch gekennzeichnet, dass** der Heizkreis (30a) eines solchen Wärmetauschers (30) an einen mit der Anode (12a) verbundenen Anodenfluidabführkreis (20) angeschlossen ist.

7. Anlage (100) nach einem der Ansprüche 1 bis 6, **dadurch gekennzeichnet, dass** der Heizkreis (32a) eines solchen Wärmetauschers (32) an einen mit der Kathode (12b) verbundenen Kathodenfluidabführkreis (22) angeschlossen ist.

8. Anlage (100) nach Anspruch 4, **dadurch gekennzeichnet, dass** der vorgenannte Wärmetauscher (26) ein Kondensator ist.

9. Anlage (100) nach Anspruch 5, **dadurch gekennzeichnet, dass** der vorgenannte Wärmetauscher (28) ein Kondensator ist.

10. Anlage (100) nach Anspruch 6, **dadurch gekennzeichnet, dass** der vorgenannte Wärmetauscher (30) ein Kondensator ist.

11. Anlage (100) nach Anspruch 7, **dadurch gekennzeichnet, dass** der vorgenannte Wärmetauscher (32) ein Kondensator ist.

12. Anlage (100) nach Anspruch 2 und einem der Ansprüche 7 bis 11, **dadurch gekennzeichnet, dass** eine in einem solchen Kondensator (26, 28, 30, 32) aufgefangene Kondensatflüssigkeit den Reformer (14) durch einen Kondensatkreis (36) speist.

13. Anlage (100) nach einem der Ansprüche 1 bis 12, **dadurch gekennzeichnet, dass** die Brennstoffzelle (12) eine Hochtemperatur-Protonenaustauschmembran-Brennstoffzelle ist.

14. Anlage (100) nach einem der Ansprüche 1 bis 13, **dadurch gekennzeichnet, dass** sie sich an Bord befindet.

15. Luftfahrzeug, das eine Anlage (100) nach einem der Ansprüche 1 bis 14 umfasst.

## Claims

1. An installation (100) comprising:
a power module supplying electricity and giving off heat, the power module comprising at least one fuel cell (12) provided with an anode (12a) and a cathode (12b), and at least one reformer (14), the anode (12b) being fed with hydrogen by the reformer (14) and the cathode (12b) being fed with oxygen, the fuel cell (12) including a heat removal loop (24);
a n absorption heat engine (40) having a first boiler (42), a condenser (46), an evaporator (48), and an absorber (50), a heat exchange circuit (42a) of the first boiler (42) being inserted in the heat removal loop (24) of the fuel cell (12) in order to cool it; and
a closed liquid circulation circuit (10), said closed circulation circuit (10) comprising at least one heat exchanger (26, 28, 30, 32) having a heating circuit (26a, 28a, 30a, 32a) thermally coupled to the power module and a heated circuit (26b, 28b, 30b, 32b) inserted in said circulation circuit (10), said closed circulation circuit (10) exchanging heat with said heating circuit (26a, 28a, 30a, 32a), thereby heating the liquid of the closed circulation circuit (10), and wherein:
a heat exchange circuit (48a) of the evaporator (48) is inserted in said closed liquid circulation circuit (10), said heat exchange circuit (48a) of the evaporator (48) having said heated liquid of the circulation circuit (10) passing therethrough after passing through the heated circuit (26b, 28b, 30b, 32b) of said heat exchanger (26, 28, 30, 32) in order to cool the heated liquid of said closed circulation circuit (10);
the installation (100) being **characterized in that** the condenser (46) of the absorption heat engine (40) has a heat exchange circuit (46a) that is inserted in a circuit (18) for feeding air to the cathode (12b) and/or to the reformer (14), in order to heat that air.

2. An installation (100) according to claim 1, **characterized in that** the absorber of the absorption heat engine (40) has a heat exchange circuit (50a) that is inserted in a circuit (68) for feeding water to the reformer (14) in order to heat that water.

3. An installation (100) according to claim 1 or claim 2, **characterized in that** the absorption heat engine (40) is a double-effect absorption heat engine, said double-effect absorption heat engine having a second boiler (44).

4. An installation (100) according to any one of claims 1 to 3, **characterized in that** the heating circuit (26a) of such a heat exchanger (26) is connected to a circuit (15) for exhausting gas from a burner (14a) of the reformer (14).

5. An installation (100) according to any one of claims 1 to 4, **characterized in that** the heating circuit (28a) of such a heat exchanger (28) is connected to an anode feed circuit (16) between the reformer (14) and the anode (12a).

6. An installation (100) according to any one of claims 1 to 5, **characterized in that** the heating circuit (30a) of such a heat exchanger (30) is connected to a circuit (20) for exhausting anode fluid and connected to the anode (12a).

7. An installation (100) according to any one of claims 1 to 6, **characterized in that** the heating circuit (32a) of such a heat exchanger (32) is connected to a circuit (22) for exhausting cathode fluid and connected to the cathode (12b).

8. An installation (100) according to claim 4, **characterized in that** the above-mentioned heat exchanger (26) is a condenser.

9. An installation (100) according to claim 5, **characterized in that** the above-mentioned heat exchanger (28) is a condenser.

10. An installation (100) according to claim 6, **characterized in that** the above-mentioned heat exchanger (30) is a condenser.

11. An installation (100) according to claim 7, **characterized in that** the above-mentioned heat exchanger (32) is a condenser.

12. An installation (100) according to claim 2 and any one of claims 7 to 11, **characterized in that** a condensate liquid recovered in such a condenser (26, 28, 30, 32) feeds the reformer (14) via a condensate circuit (36).

13. An installation (100) according to any one of claims 1 to 12, **characterized in that** the fuel cell (12) is a high temperature proton exchange membrane fuel cell.

14. An installation (100) according to any one of claims 1 to 13, **characterized in that** it is an on-board installation.

15. An aircraft including an installation (100) according to any one of claims 1 to 14.
